# EUROPEAN PATENT SPECIFICATION

(11) **EP 1 340 569 B1**
(45) Date of publication and mention of the grant of the patent: **27.04.2005**
(21) Application number: 03425115.7
(22) Date of filing: 24.02.2003
(51) Int. Cl.: B23B 1/00, B23Q 39/04

(54) **A method and unit for machining parts in a transfer type machine tool**
Verfahren und Einheit zur Bearbeitung von Werkstücken in einer Werkzeugmaschine mit Rundschalttisch
Procédé et unité pour l'usinage de pièces dans une machine-outil de transfert rotatif

(30) Priority: 28.02.2002 IT BO20020099
(43) Date of publication of application: 03.09.2003
(73) Proprietor: IEMCA Giuliani Macchine Italia S.p.A., 48018 Faenza (Ravenna) (IT)
(72) Inventor: Dellamore, Edo, 40050 Monte San Pietro (Bologna) (IT)
(74) Representative: Lanzoni, Luciano

(56) References cited:
- EP-A- 0 371 450
- EP-A- 0 936 027
- EP-A- 1 016 499
- US-A- 5 020 402
- US-A- 5 832 590

## Description

The present invention relates to a method and unit for machining parts in a transfer type machine tool, according to the preamble of claim 1 and claim 11 respectively (see, for example, EP-0 936 027 - A).

More specifically, the present invention relates to transfer type machine tools with a rotary table, in which the parts to be subjected to various types of mechanical machining are carried in succession into a plurality of machining stations where various machining units work on them by a rotary table, to which they are fixed by locking means.

As is known, machine tools of this type have a supporting base for the machining units, arranged around the rotary table and the number of locking elements is normally equal to that of the machining stations, allowing simultaneous machining on a plurality of parts.

The first machining station is a loading station, where the part to be machined is fixed to one of the locking elements. The rotary table then carries the part through the various machining stations to an unloading station, where the locking means release the finished part.

In some prior art machine tools the machining units arranged around the rotary table cannot perform an entire machining cycle on parts.

More precisely, turning operations are performed beforehand, using a lathe outside the machine tool in question, after the parts have been separated from a bar by means of a cutting operation.

As a result of this, the times required to produce individual parts are extremely lengthy, since they must be transported from the cutting means to the lathe, and then from the lathe to the machine tool. Other prior machine tools, however, can perform the entire part machining cycle, including turning and cutting the part from a bar.

On machine tools of this type, next to the loading station there is a primary spindle whose longitudinal axis is parallel with the axis of the rotary table and which is supported by a load-bearing body that moves along a feed axis parallel with the above-mentioned axes.

Inside the primary spindle, the bar is locked so that the end to be processed and made into a finished product with a succession of machining operations projects outside the spindle.

In practice, the primary spindle, to which the bar is rigidly attached, is rotated and moved forward by the load-bearing body along the feed axis and towards a tool holder carriage which moves in two directions transversal to the feed axis. In this way it carries the above-mentioned end of the bar to a given tool, which performs the turning.

When this machining is complete, a secondary spindle or counter-spindle, mounted on a two-axis module, moves along an axis aligned with the primary spindle feed axis, coming alongside the end of the bar, and at the same time is made to rotate about this axis until it reaches the same speed of rotation as the primary spindle.

At this point the end of the bar, on which the turning work is complete, is inserted and locked in the secondary spindle.

The primary and secondary spindles rotate in a synchronised fashion, allowing cutting means to detach the end from the bar. The part is locked on the secondary spindle, which stops rotating.

The primary spindle is now free to release the bar and feed means of the known type feed the bar longitudinally over a given length corresponding to a new part.

When the secondary spindle has stopped rotating, it transfers the part to one of the locking elements on the rotary table, which carries the part to the successive machining steps at the machining units.

This type of machine tool, although allowing the entire part machining cycle to be performed, still has several disadvantages.

It should be noticed that any machining operations to be performed on the end of the part inserted in the primary spindle and for which strict observation of the coaxial and concentric tolerances is required are currently performed at one of the machining stations on the rotary table, and in such cases part positioning by the above-mentioned fixing elements relative to the tool does not provide the same precision as can be achieved with the primary spindle.

The aim of the present invention is to produce a transfer type machine tool which is free of the above-mentioned disadvantages.

Accordingly, the present invention provides a method as defined in claim 1.

The present invention also relates to a unit for machining parts as defined in claim 11.

The technical features of the present invention, in accordance with the above-mentioned aims, are set out in the claims herein and the advantages more clearly illustrated in the detailed description which follows, with reference to the accompanying drawings, which illustrate a preferred embodiment, without limiting the scope of its application, and in which:
- Figure 1 is a schematic perspective view of a portion of a transfer type machine tool equipped with the unit made in accordance with the present invention;
- Figure 2 is an enlarged schematic perspective view of the unit illustrated in Figure 1;
- Figures 3 and 4 are schematic side views, partially in cross-section, of two different embodiments of a detail illustrated in Figure 2.

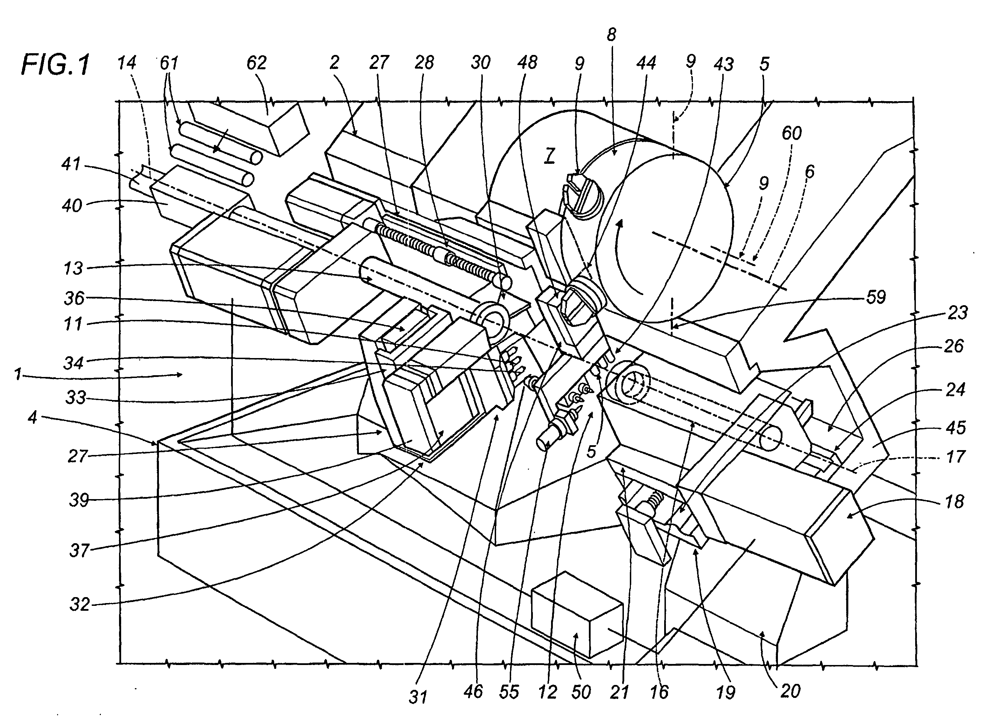

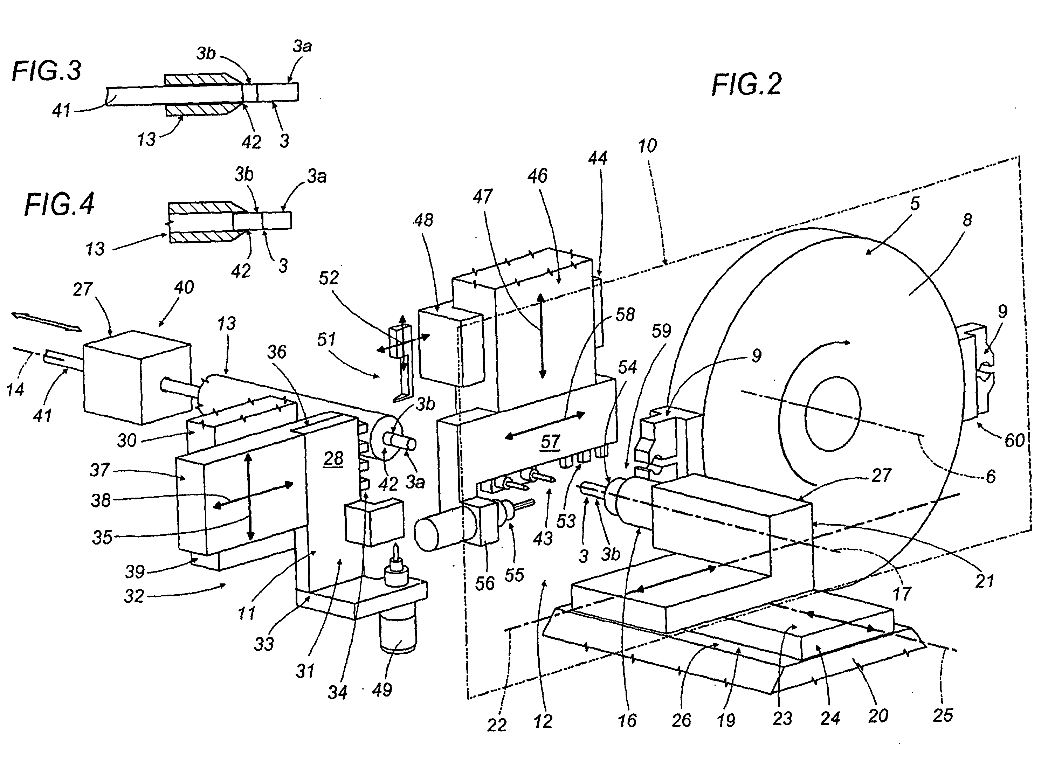

With reference to Figures 1 and 2, the numeral 1 denotes as a whole a portion of a transfer type machine tool equipped with a unit 2 for machining parts 3.

The portion of machine 1 comprises a base 4 supporting the unit 2 which comprises a table 5 that rotates about a substantially horizontal axis of rotation 6 driven by a motor 7. The table 5 has a substantially cylindrical body 8 with, along its outer cylindrical surface, a plurality of pick up and locking parts 9 mounted at equal angular intervals from each other.

The unit 2 comprises, on opposite sides of a vertical plane 10 (illustrated in Figure 2) in which the rotary table 5 lies, a first and a second machining station, labelled, respectively, 11 and 12 from left to right in Figures 1 and 2.

At the first machining station 11 there is a first spindle 13 which is rotationally driven by a motor 15 about an axis 14 parallel with the axis 6. Similarly, at the second machining station 12 there is a second spindle 16 which is rotationally driven by a motor 18 about an axis 17 parallel with the axis 14. A first supporting and driving module 19 is attached to the second spindle 16. The module is, in turn, supported by an upright 20 on the base 4. The first module 19 comprises a first slide 21 supporting the second spindle 16 which is mobile in both directions, transversally to the axis 17, along a path 22 on a sliding surface 23 formed by the upper face of a second slide 24, also mobile in both directions, parallel with the axis 17, along a path 25 on a sliding surface 26 formed by the top of the upright 20.

Similarly, as illustrated in Figure 1 and schematically with a block in Figure 2, a second supporting and driving module 27 is attached to the first spindle 13. As can be seen more clearly in Figure 1, the second module comprises a slide 28 which runs along the axis 14, in both directions and driven by a motor 29, along a guide 30 supported by the base 4.

At the first machining station 11 there are first tool means 31 comprising a supporting carriage 32, in turn supported by the base 4 and consisting of a first slide 33 supporting a plurality of tools 34. The first slide 33 moves both ways in a vertical direction 35 along a guide 36 made on one side of a second slide 37, in turn moving, in a transversal direction 38 to the axis 14 along a guide 39 supported by the base 4.

In a first embodiment illustrated in particular in Figures 1, 2 and 3, a bar 41 is fed with intermittent motion to the first spindle 13 by feed means 40, of the known type and illustrated in Figure 1 by a simple block. The methods described below are used to perform a cutting operation to obtain from the bar the individual parts 3 to be machined.

More precisely, the feed means 40 feed the bar 41 into the first spindle 13, feeding it along the axis 14 by a length which leaves one end of the bar 41 projecting beyond the mouth 42 of the spindle 13 by a first given length which, as illustrated in Figure 3 is just over the length of a part 3.

In practice, at this point, the motor 15 causes the first spindle 13 to rotate and the carriage 32, by means of its slides 33 and 37, driven by respective motors, not illustrated and of the known type, moves a selected tool 34 to the length of the bar 41 projecting from the mouth 42 of the spindle 13 to perform a turning operation on at least one end portion of the bar 41. It should be noticed that a portion 3b close to the mouth 42 of the spindle 13, due to obvious problems caused by interference between the tool 34 and the spindle 13, is excluded from this first turning operation.

In accordance with the present invention, at the second machining station 12, there are second tool means, labelled 43 as a whole, which, with the methods more clearly described below, perform a second turning operation on the portion 3b of the part 3 obtained by cutting.

As illustrated in Figures 1 and 2, the tool means 43 comprise a carriage 44 supported, as illustrated in Figure 1, by a substantially vertical wall 45 of the base 4. The carriage 44 comprises a slide 46 which moves both ways in a vertical direction 47 along a guide 48 (see Figure 1) made on the vertical wall 45.

In practice, when the first turning operation is complete and after any other drilling and/or milling and/or boring operations performed by other tools, represented for example by an electrospindle 49 supported by the slide 33, the carriage 32 draws back the tools 34 and 49 to a home position. The first and second spindles 13, 16 positioned symmetrically relative to the plane 10 in which the rotary table 5 lies, move alongside one another along the axes 14 and 17 aligned with one another.

The motor 18 of the second spindle 16 makes the latter rotate about its axis 17 at a speed synchronised with the speed of rotation of the first spindle 13, using synchronising means represented by a block 50, which make the electrical connection between the motors 15 and 18 (see Figure 1).

When it has reached the free end of the length of the bar 42 projecting from the first spindle 13 and previously machined, the second spindle 16 receives a length of the portion previously machined in the first station 11 in its mouth 54 and grips it. A cutting tool, labelled 51 in Figure 2, simultaneously moves both ways in a vertical direction 52, transversally to the axis 14 and substantially at a tangent to the mouth 42 of the first spindle 13, and in another, substantially horizontal direction 52a, so that it separates from the bar 41, rotated by the first spindle 13, the length of the bar 41 projecting from the mouth 42 of the spindle 13, thus forming a part 3.

The second spindle 16, performing its return stroke substantially along the axis 17 away from the first station 11, arrives at the second machining station 12, where an appropriate tool 53 which is part of the second tool means 43 is brought by the carriage 44 into contact with the portion 3b not previously machined, to perform turning on this portion.

At this point, similarly to what has been said with reference to the first machining station 11, at the second station 12 the portion 3b of the part 3 previously excluded from the machining performed at the first station 11 is subjected to turning by the tool 53.

Where necessary, at this second machining station 12, the portion 3b of the part 3 may also be subjected to other drilling and/or milling and/or boring operations using other types of tools, also part of the tool means 43. A tool change-over operation is possible because the tool means 43, such as an electrospindle 55 supported by a bracket 56, are mounted on a slide 57 supported by the lower end of the carriage 44 and can be moved both ways by alternative drive means of the known type and not illustrated, in a direction 58 transversal to the axis 17 of the second spindle 16.

When the second machining operation on the portion 3b is complete, the part 3, by means of suitable movements by the first and second slides 21 and 24 of the first module 19, is released by the second spindle 16, at a loading station 59, and transferred to the pick up and locking parts 9 on the body 8 of the rotary table 5. The table, rotating clockwise about its axis 6 as illustrated in Figure 2, carries the part 3 through a plurality of machining stations, at which a plurality of machining units, not illustrated, perform additional machining on the part 3, then to an unloading station 60 for each finished part 3.

In a second embodiment, illustrated in Figures 1 and 4, the first spindle 13 is fed not with bars 41, but with sections of bar labelled 61 in Figure 1 forming the parts 3 to be machined. The parts 3 are fed one at a time to the first spindle 13 by second feed means, illustrated with a block labelled 62, so that, as illustrated in Figure 4, a length of the part 3 shorter than the part 3 projects from the mouth 42 of the spindle 13, since a short length of the part must form a portion of the part 3 to be gripped by the spindle 13.

In this case, the parts 3 being the same length as those of the embodiment described above, the portion 3a machinable at the first machining station 11 is smaller whilst, obviously the portion 3b to be machined at the second machining station 12 is bigger.

It should be noticed that since the unit 2 has two separate machining stations equipped with respective tool holder carriages and positioned symmetrically relative to the plane 10 in which the rotary table 5 lies, the productivity of the unit 2 is higher than that of prior art units, since two parts 3 can be machined and even turned simultaneously.

The invention described can be subject to numerous modifications and variations without thereby departing from the scope of the inventive concept as defined in the appended claims.

For example, in an embodiment not illustrated the sections 61 may be fed to the unit 2 by the rotary head 5, which could pick up the sections 61 from a pick up station using the pick up and locking means 9 and carry them to the machining station 11. Moreover, the second spindle 16 can be fitted with a tailstock for machining narrow parts 3 which are rotated by the first spindle 13. When the turning is complete, the second spindle 16 repositions the tailstock on the carriage 44.

## Claims

1. A method for machining parts in a transfer type machine tool, ***comprising*** the steps of feeding the parts (3) to a first machining station (11) in which at least a first length of the parts (3) project from a first spindle (13); performing at least one turning operation on at least one portion (3a) of the first given length of the part (3) in the first station (11); transferring the part (3) to a second spindle (16) which grips at least part of the first length; performing at least one turning operation on a second length of the part (3) at a second machining station (12); ***characterised in that it comprises the further step of transferring the part (3) previously turned to pick up and locking means (9) on a rotary table (5) at a loading station (59)*** by a movement of the second spindle (16) transversally to its axis of rotation (17).

2. The method according to claim 1, in which the parts (3) are obtained from a bar (41), the method being **characterised in that** it comprises the steps of feeding the bar (41) to the first spindle (13) so that a length of the bar at least equal to the length of a part (3) projects from the first spindle (13); cutting the bar (41) to obtain the part (3).

3. The method according to claim 1, **characterised in that** the parts (3) are fed to the first spindle (13) one at a time, so that a given length shorter than the part (3) projects from the spindle (13).

4. The method according to claim 2, **characterised in that** the step of transferring the part (3) comprises the further steps of bringing the first and second spindles (13, 16) towards one another, gripping the part (3) with the second spindle (16), separating the part (3) from the bar (41) with the cutting step, transferring the part (3) obtained towards the second turning station (12) with a step in which the first and second spindles (13, 16) are moved away from one another.

5. The method according to claim 3, **characterised in that** the step of transferring the part (3) comprises the further steps of bringing the first and second spindles (13, 16) towards one another and gripping the part released by the first spindle (13) with the second spindle (16).

6. The method according to any of the foregoing claims from 1 to 5, **characterised in that** at the second machining station (12) there is at least one tool (43, 53) operating in conjunction with the second spindle (16) to perform turning on at least one portion (3b) of the second length of the part (3).

7. The method according to claim ***1,* characterised in that** it comprises the steps of transferring each part (3), using the rotary table (5), through a plurality of machining stations with respective machining units, to an unloading station (60) for each finished part (3).

8. The method according to claim 4, **characterised in that** it comprises a step of synchronising the speeds of rotation of the first and second spindles (13, 16) at least during the step of transferring the part (3) from the first to the second spindle (13, 16).

9. The method according to any of the foregoing claims from 1 to ***8,* characterised in that**, at least at the second machining station (12), it comprises further machining in the form of drilling and/or milling and/or boring on the part (3).

10. The method according to any of the foregoing claims from 1 to ***9,* characterised in that** it includes the simultaneous machining of two different parts (3) respectively at the first and second machining stations (11, 12).

11. A unit for machining parts in a transfer type machine tool, ***comprising*** a first machining station (11) equipped with a first spindle (13), rotating about an axis (14), and adapted to support parts (3) with a first given length projecting from the first spindle (13), first tool means (31) for performing at least one turning operation on at least a portion (3a) of the first given length of the parts (3) in the first station (11); a second machining station (12) equipped with a second spindle (16), rotating about an axis (17), adapted to receive at least part of the first length of the part (3) and second tool means (43) for performing at least one turning operation on a second length of the part (3) at the second machining station (12); ***characterised in that it further comprises a rotary table (5) which pick up and locking means (9) which can move with intermittent motion about an axis (6) of rotation parallel with the axes (14,17) of the first and second spindles (13,16) and a first module (19) which supports and drives the second spindle (16); the first module (19) being mobile transversally to the axis (17) of the second spindle (16) to transfer the part (3) previously turned to the rotary table (5) pick up and locking means (9) at a loading station (59).***

12. The unit according to claim ***11*, characterised in that** it comprises first means (40) for intermittently feeding a continuous bar (41) to the first spindle (13), so that for each feed operation a length of bar (41) at least equal to the length of a part (3) projects from the first spindle; cutting means (51) operating in conjunction with the first spindle (13) to separate from the bar (41) a length of the bar which forms a part (3).

13. The unit according to claim ***11,* characterised in that** it comprises second means (62) for feeding sections (61) of the bar (41), each forming a part (3) to be machined by the first spindle (13), one at a time so that a given length shorter than the part (3) projects from the spindle (13).

14. The unit according to claim ***12*, characterised by** the second spindle (16) being mobile thanks to the first module (19) along the axis (17) aligned with the axis (14) of rotation of the first spindle (13) and between two end positions, one close to the first spindle (13) for picking up the part (3) from the first spindle, and one away from the first spindle, at the second machining station (12).

15. The unit according to any of the foregoing claims from ***12*** to ***14,* characterised in that** it comprises a second module (27) which supports and drives the first spindle (13); the first spindle (13) being mobile thanks to the second module (27) at least along the axis (14) aligned with the axis (17) of rotation of the second spindle (16).

16. The unit according to either of the foregoing claims ***14*** or ***15,* characterised in that**, during part (3) transfer, the first and second modules (19, 27) can move towards and away from one another.

17. The unit according to any of the foregoing claims from ***11*** to ***16,* characterised in that**, at the second machining station (12) it comprises at least one tool (53), being part of the second tool means (43), operating in conjunction with the second spindle (16) to perform turning on at least one portion (3b) of the second length of the part (3).

18. The unit according to claim ***17,* characterised in that** it comprises a carriage (44) which supports the tool (53), the carriage being mobile at least in a given direction (47) transversal to the axis (17) of rotation of the second spindle (16).

19. The unit according to claim ***11,* characterised in that** the rotary table (5) moves through a plurality of machining stations at which a plurality of machining units perform additional machining operations on the part (3) until it reaches an unloading station (60) for each finished part (3).

20. The unit according to claim ***18***, **characterised in that** the carriage (44) supports another plurality of tools (55) which, at the second machining station (12), perform additional drilling and/or milling and/or boring on the part (3); the carriage (44) and first module (19) being mobile relative to one another so as to allow tool change-over operations in order to perform all of the additional machining operations on the part (3).

21. The unit according to any of the foregoing claims from ***11*** to ***20,* characterised in that** at least one of the first and second spindles (13, 16) has means (50) for synchronising the speed of rotation, making the speed of rotation of the two spindles (13, 16) equal at least during transfer of the part (3) from the first to the second spindle (13, 16).

22. The unit according to any of the foregoing claims from ***11*** to ***21,* characterised in that** the first and second spindles (13, 16) are positioned specularly relative to a plane (10) in which the rotary table (5) lies.

## Patentansprüche

1. Verfahren zur Bearbeitung von Werkstücken in einer Werkzeugmaschine vom Typ mit Rundschalttisch, enthaltend die Phasen des Zuführens der Werkstücke (3) an eine erste Bearbeitungsstation (11), in welcher wenigstens eine erste Länge der Werkstücke (3) aus einer ersten Spindel (13) herausragt; des Ausführens von wenigstens einer Dreharbeit an wenigstens einem Abschnitt (3a) der ersten bestimmten Länge des Werkstücks (3) in der ersten Station (11); des Transferierens des Werkstückes (3) an eine zweite Spindel (16), welche wenigstens einen Teil der ersten Länge greift; des Ausführens von wenigstens einer Dreharbeit an einer zweiten Länge des Werkstücks (3) an einer zweiten Bearbeitungsstation (12); **dadurch gekennzeichnet, dass** es die weitere Phase des Transferierens des vorher gedrehten Werkstücks (3) an Aufnahme- und Feststellmittel (9) eines Drehtisches (5) an einer Ladestation (59) enthält, und zwar durch eine Bewegung der zweiten Spindel (16) quer zu ihrer Drehachse (17).

2. Verfahren nach Patentanspruch 1, bei welchem die Werkstücke (3) aus einer Stange (41) erhalten sind, wobei das Verfahren **dadurch gekennzeichnet ist, dass** es die Phasen des Zuführens der Stange (41) an die erste Spindel (13) enthält, so dass eine Länge der Stange wenigstens gleich der Länge eines Werkstückes (3) aus der ersten Spindel (13) herausragt; sowie des Schneidens der Stange (41), um das Werkstück (3) zu erhalten.

3. Verfahren nach Patentanspruch 1, **dadurch gekennzeichnet, dass** die Werkstücke (3) der ersten Spindel (13) einzeln zugeführt werden, so dass eine bestimmte Länge, kürzer als das Werkstück (3) selbst, aus der Spindel (13) herausragt.

4. Verfahren nach Patentanspruch 2, **dadurch gekennzeichnet, dass** die Phase des Transferierens des Werkstücks (3) die weiteren Phasen des einander Annäherns der ersten und zweiten Spindeln (13, 16), des Greifens des Werkstücks (3) durch die zweite Spindel (16) und des Trennens des Werkstücks (3) von der Stange (41) durch die Schneidphase enthält, sowie des Transferierens des erhaltenen Werkstücks (3) in Richtung der zweiten Bearbeitungsstation (12) durch eine Phase, in welcher die ersten und zweiten Spindeln (13, 16) voneinander fort bewegt werden.

5. Verfahren nach Patentanspruch 3, **dadurch gekennzeichnet, dass** die Phase des Transferierens des Werkstücks (3) die weiteren Phasen des einander Annäherns der ersten und zweiten Spindeln (13, 16) und des Greifens durch die zweite Spindel (16) des durch die erste Spindel (13) freigegebenen Werkstücks enthalten.

6. Verfahren nach einem beliebigen der vorstehenden Patentansprüche von 1 bis 5, **dadurch gekennzeichnet, dass** an der zweiten Bearbeitungsstation (12) wenigstens ein Werkzeug (43, 53) vorhanden ist, das mit der zweiten Spindel (16) zusammenarbeitet, um das Drehen an wenigstens einem Abschnitt (3b) der zweiten Länge des Werkstücks (3) auszuführen.

7. Verfahren nach Patentanspruch 1, **dadurch gekennzeichnet, dass** es die Phasen des Transferierens eines jeden Werkstücks (3), unter Verwendung des Drehtisches (5), durch eine Anzahl von Bearbeitungsstationen mit jeweiligen Bearbeitungseinheiten bis zu einer Entladestation (60) für jedes fertiggestellte Werkstück (3) enthält.

8. Verfahren nach Patentanspruch 4, **dadurch gekennzeichnet, dass** es eine Phase der Synchronisierung der Drehgeschwindigkeiten der ersten und zweiten Spindeln (13, 16) wenigstens während der Phase des Transferierens des Werkstücks (3) von der ersten an die zweite Spindel (13, 16) enthält.

9. Verfahren nach einem beliebigen der vorstehenden Patentansprüche von 1 bis 8, **dadurch gekennzeichnet, dass** es wenigstens an der zweiten Bearbeitungsstation (12) die weitere Bearbeitung in Form des Bohrens und/oder Fräsens und/oder Ausbohrens an dem Werkstück (3) vorsieht.

10. Verfahren nach einem beliebigen der vorstehenden Patentansprüche von 1 bis 9, **dadurch gekennzeichnet, dass** es die gleichzeitige Bearbeitung von zwei verschiedenen Werkstücken (3) vorsieht, jeweils an der ersten und an der zweiten Bearbeitungsstation (11, 12).

11. Einheit zur Bearbeitung von Werkstücken in einer Werkzeugmaschine vom Typ mit Rundschalttisch, enthaltend eine erste Bearbeitungsstation (11), versehen mit einer ersten Spindel (13), die sich um eine Achse (14) dreht und geeignet ist, Werkstücke (3) mit einer ersten bestimmten Länge aus der ersten Spindel (13) herausragend zu tragen, und ersten Werkzeugmitteln (31) zum Ausführen von wenigstens einer Dreharbeit an wenigstens einem Abschnitt (3a) der ersten bestimmten Länge der Werkstücke (3) in der ersten Station (11); eine zweite Bearbeitungsstation (12), versehen mit einer zweiten Spindel (16), die sich um eine Achse (17) dreht und geeignet ist, wenigstens einen Teil der ersten Länge des Werkstücks (3) aufzunehmen, und zweiten Werkzeugmitteln (43) zum Ausführen von wenigstens einer Dreharbeit an einer zweiten Länge des Werkstücks (3) an der zweiten Bearbeitungsstation (12); **dadurch gekennzeichnet, dass** sie ausserdem einen Drehtisch (5) mit Aufnahme- und Feststellmitteln (9) enthält, welcher sich schrittweise um eine Drehachse (6) parallel zu den Achsen (14, 17) der ersten und zweiten Spindeln (13, 16) bewegen kann, und ein erstes Modul (19), welches die zweite Spindel (16) trägt und antreibt; wobei das erste Modul (19) quer zu der Achse (17) beweglich ist, um das zuvor gedrehte Werkstück (3) an die Aufnahme- und Feststellmittel (9) des Drehtisches (5) an einer Ladestation (59) zu transferieren.

12. Einheit nach Patentanspruch 11, **dadurch gekennzeichnet, dass** sie erste Mittel (40) zum schrittweisen Zuführen einer kontinuierlichen Stange (41) an die erste Spindel (13) enthält, so dass bei jedem Zuführvorgang eine Länge der Stange (41) aus der ersten Spindel herausragt, die wenigstens der Länge eines Werkstücks (3) entspricht; wobei Schneidmittel (51) mit der ersten Spindel (13) zusammenarbeiten, um von der Stange (41) eine Stangenlänge abzutrennen, welche ein Werkstück (3) bildet.

13. Einheit nach Patentanspruch 11, **dadurch gekennzeichnet, dass** sie zweite Mittel (62) zum einzelnen Zuführen von Abschnitten (61) der Stange (41) enthält, von denen jeder ein durch die erste Spindel (13) zu bearbeitendes Werkstück (3) bildet, und zwar so, dass eine bestimmte Länge aus der Spindel (13) herausragt, die kürzer ist als das Werkstück (3).

14. Einheit nach Patentanspruch 12, **dadurch gekennzeichnet, dass** die zweite Spindel (16) dank des ersten Moduls (19) beweglich ist, und zwar entlang der Achse (17), die zu der Drehachse (14) der ersten Spindel (13) ausgerichtet ist, und zwischen zwei Endpositionen, davon eine dicht an der ersten Spindel (13) zum Aufnehmen des Werkstücks (3) von der ersten Spindel, und eine von der ersten Spindel (13) entfernt an der zweiten Bearbeitungsstation (12).

15. Einheit nach einem beliebigen der vorstehenden Patentansprüche von 12 bis 14, **dadurch gekennzeichnet, dass** sie ein zweites Modul (27) enthält, welches die erste Spindel (13) trägt und antreibt; wobei die erste Spindel (13) dank des zweiten Moduls (27) beweglich ist, und zwar entlang der Achse (14), die zu der Drehachse (17) der zweiten Spindel (16) ausgerichtet ist.

16. Einheit nach einem der vorstehenden Patentansprüche 14 oder 15, **dadurch gekennzeichnet, dass** sich die ersten und zweiten Module (19, 27) während dem Transfer des Werkstückes (3) zueinander hin und voneinander fort bewegen können.

17. Einheit nach einem beliebigen der vorstehenden Patentansprüche von 11 bis 16, **dadurch gekennzeichnet, dass** sie an der zweiten Bearbeitungsstation (12) wenigstens ein Werkzeug (53) enthält, welches Teil der zweiten Werkzeugmittel (43) ist, zusammenarbeitend mit der zweiten Spindel (16), um eine Dreharbeit an wenigstens einem Abschnitt (3b) der zweiten Länge des Werkstücks (3) auszuführen.

18. Einheit nach Patentanspruch 17, **dadurch gekennzeichnet, dass** sie einen Schlitten (44) enthält, welcher das Werkzeug (53) trägt, wobei der Schlitten in wenigstens einer vorgegebenen Richtung (47) quer zu der Drehachse (17) der zweiten Spindel (16) beweglich ist.

19. Einheit nach Patentanspruch 11, **dadurch gekennzeichnet, dass** sich der Drehtisch (5) durch eine Anzahl von Bearbeitungsstationen bewegt, an welchen eine Anzahl von Bearbeitungseinheiten zusätzliche Bearbeitungen an dem Werkstück (3) ausführen, bis es eine Entladestation (60) für jedes fertiggestellte Werkstück (3) erreicht.

20. Einheit nach Patentanspruch 18, **dadurch gekennzeichnet, dass** der Schlitten (44) eine weitere Anzahl von Werkzeugen (55) trägt, welche an der zweiten Bearbeitungsstation (12) zusätzliche Bohr- und/oder Fräs- und/oder Ausbohrarbeiten an dem Werkstück (3) ausführen; wobei der Schlitten (44) und das erste Modul (19) im Verhältnis zueinander beweglich sind, so dass sie einen Werkzeugwechsel erlauben, um alle die zusätzlichen Bearbeitungen an dem Werkstück (3) vorzunehmen.

21. Einheit nach einem beliebigen der vorstehenden Patentansprüche von 11 bis 20, **dadurch gekennzeichnet, dass** wenigstens eine der ersten und zweiten Spindeln (13, 16) Mittel (50) zum Synchronisieren der Drehgeschwindigkeit enthält, um die Umdrehung der beiden Spindeln (13, 16) wenigstens während dem Transfer des Werkstücks (3) von der ersten an die zweite Spindel (13, 16) gleich zu machen.

22. Einheit nach einem beliebigen der vorstehenden Patentansprüche von 11 bis 21, **dadurch gekennzeichnet, dass** die ersten und zweiten Spindeln (13, 16) spiegelartig im Verhältnis zu einer Ebene (10) angeordnet sind, in welcher der Drehtisch (5) liegt.

## Revendications

1. Un procédé pour l'usinage de pièces dans une machine-outil de type à transfert rotatif, comprenant les phases consistant à alimenter les pièces (3) en question à une première station d'usinage (11) dans laquelle au moins un premier tronçon des pièces (3) dépasse d'un premier mandrin (13) ; à effectuer, au niveau de la première station (11), au moins une opération de tournage sur au moins une portion (3a) du premier tronçon déterminé de la pièce (3) ; à transférer la pièce (3) à un deuxième mandrin (16) qui bloque au moins une partie du premier tronçon ; à effectuer au moins une opération de tournage sur un deuxième tronçon de la pièce (3) au niveau d'une deuxième station d'usinage (12) ; ledit procédé étant **caractérisé en ce qu'**il comprend l'autre phase consistant à transférer la pièce (3) précédemment tournée à des moyens de prise et de blocage (9) situés sur une table tournante (5) au niveau d'une station de chargement (59) par le biais d'un mouvement du deuxième mandrin (16) transversal à son axe de rotation (17).

2. Le procédé selon la revendication 1, dans lequel les pièces (3) sont obtenues à partir d'une barre (41), **caractérisé en ce qu'**il comprend les phases consistant à alimenter la barre (41) au premier mandrin (13) de manière à ce qu'un tronçon de la barre au moins égal à la longueur d'une pièce (3) dépasse du premier mandrin (13) ; à couper la barre (41) pour obtenir la pièce (3).

3. Le procédé selon la revendication 1, **caractérisé en ce que** les pièces (3) sont alimentées, une à la fois, au premier mandrin (13) de manière à ce qu'un tronçon déterminé plus court que la longueur de la pièce (3) dépasse de ce même mandrin (13).

4. Le procédé selon la revendication 2, **caractérisé en ce que** la phase de transfert de la pièce (3) comprend les autres phases consistant à rapprocher l'un vers l'autre les premier et deuxième mandrins (13, 16), à bloquer la pièce (3) avec le deuxième mandrin (16), à séparer la pièce (3) de la barre (41) par l'intermédiaire de la phase de coupe, à transférer la pièce (3) obtenue vers la deuxième station de tournage (12) par l'intermédiaire d'une phase durant laquelle les premier et deuxième mandrins (13, 16) sont éloignés l'un de l'autre.

5. Le procédé selon la revendication 3, **caractérisé en ce que** la phase de transfert de la pièce (3) comprend les autres phases consistant à rapprocher l'un vers l'autre les premier et deuxième mandrins (13, 16) et à bloquer la partie relâchée par le premier mandrin (13) avec le deuxième mandrin (16).

6. Le procédé selon l'une quelconque des revendications précédentes de 1 à 5, **caractérisé en ce qu'**il y a, au niveau de la deuxième station d'usinage (12), au moins un outil (43, 53) qui fonctionne en association avec le deuxième mandrin (16) pour effectuer une opération de tournage sur au moins une portion (3b) du deuxième tronçon de la pièce (3).

7. Le procédé selon la revendication 1, **caractérisé en ce qu'**il comprend les phases consistant à transférer chaque pièce (3), au moyen de la table tournante (5), à travers une pluralité de stations d'usinage équipées de groupes d'usinage respectifs, jusqu'à une station de déchargement (60) relative à chaque pièce finie (3).

8. Le procédé selon la revendication 4, **caractérisé en ce qu'**il comprend une phase de synchronisation des vitesses de rotation des premier et deuxième mandrins (13, 16) au moins durant la phase de transfert de la pièce (3) du premier au deuxième mandrin (13, 16).

9. Le procédé selon l'une quelconque des revendications précédentes de 1 à 8, **caractérisé en ce qu'**il prévoit, au moins au niveau de la deuxième station d'usinage (12), d'autres usinages de perçage et/ou fraisage et/ou alésage de la pièce (3).

10. Le procédé selon l'une quelconque des revendications précédentes de 1 à 9, **caractérisé en ce qu'**il prévoit l'usinage simultané de deux pièces (3) différentes se trouvant, respectivement, au niveau de la première et de la deuxième stations d'usinage (11, 12).

11. Une unité pour l'usinage de pièces dans une machine-outil de type à transfert rotatif, comprenant une première station d'usinage (11) équipée d'un premier mandrin (13) tournant autour d'un axe (14) et conçu pour supporter des pièces (3) dont un premier tronçon déterminé dépasse du premier mandrin (13) lui-même, des premiers moyens outils (31) pour effectuer, au niveau de la première station (11), au moins une opération de tournage sur au moins une portion (3a) du premier tronçon déterminé des pièces (3) ; une deuxième station d'usinage (12) équipée d'un deuxième mandrin (16) tournant autour d'un axe (17) et conçu pour recevoir au moins une partie du premier tronçon de la pièce (3), et des deuxièmes moyens outils (43) pour effectuer, au niveau de la deuxième station d'usinage (12), au moins une opération de tournage sur un deuxième tronçon de la pièce (3) ; ladite unité étant **caractérisée en ce qu'**elle comprend également une table tournante (5), équipée de moyens de prise et de blocage (9), qui peut se mouvoir par un mouvement intermittent autour d'un axe (6) de rotation parallèle aux axes (14, 17) des premier et deuxième mandrins (13, 16), et un premier module (19) qui supporte et entraîne le deuxième mandrin (16) ; le premier module (19) étant mobile transversalement à l'axe (17) du deuxième mandrin (16) pour transférer la pièce (3) précédemment tournée aux moyens de prise et de blocage (9) de la table tournante (5) au niveau d'une station de chargement (59).

12. L'unité selon la revendication 11, **caractérisée en ce qu'**elle comprend des premiers moyens (40) pour alimenter par intermittence une barre continue (41) au premier mandrin (13) de manière à faire dépasser de ce même premier mandrin, à chaque opération d'alimentation, un tronçon de barre (41) au moins égal à la longueur d'une pièce (3) ; des moyens de coupe (51) fonctionnant en association avec le premier mandrin (13) pour séparer de la barre (41) un tronçon de barre constituant une pièce (3).

13. L'unité selon la revendication 11, **caractérisée en ce qu'**elle comprend des deuxièmes moyens (62) pour alimenter une à la fois des sections (61) de barre (41), définissant chacune une pièce (3) à usiner par le premier mandrin (13), de manière à ce qu'un tronçon déterminé plus court que la longueur de la pièce (3) dépasse de ce même mandrin (13).

14. L'unité selon la revendication 12, **caractérisée en ce que** le deuxième mandrin (16) est mobile, par l'intermédiaire du premier module (19), le long de l'axe (17) coïncidant avec l'axe (14) de rotation du premier mandrin (13) et entre deux positions limite, à savoir, une position proche du premier mandrin (13) pour prélever la pièce (3) de ce même premier mandrin, et une position éloignée du premier mandrin au niveau de la deuxième station d'usinage (12).

15. L'unité selon l'une quelconque des revendications précédentes de 12 à 14, **caractérisée en ce qu'**elle comprend un deuxième module (27) qui supporte et entraîne le premier mandrin (13) ; le premier mandrin (13) étant mobile, par l'intermédiaire du deuxième module (27), au moins le long de l'axe (14) coïncidant avec l'axe (17) de rotation du deuxième mandrin (16).

16. L'unité selon l'une ou l'autre des revendications précédentes 14 ou 15, **caractérisée en ce que** les premier et deuxième modules (19, 27) peuvent, durant le transfert de la pièce (3), se rapprocher l'un vers l'autre et s'éloigner l'un de l'autre.

17. L'unité selon l'une quelconque des revendications précédentes de 11 à 16, **caractérisée en ce qu'**elle comprend, au niveau de la deuxième station d'usinage (12), au moins un outil (53) qui fait partie des deuxièmes moyens outils (43) et fonctionne en association avec le deuxième mandrin (16) pour effectuer une opération de tournage sur au moins une portion (3b) du deuxième tronçon de la pièce (3).

18. L'unité selon la revendication 17, **caractérisée en ce qu'**elle comprend un chariot (44) qui supporte l'outil (53), ledit chariot étant mobile au moins dans une direction donnée (47) transversale à l'axe (17) de rotation du deuxième mandrin (16).

19. L'unité selon la revendication 11, **caractérisée en ce que** la table tournante (5) se meut à travers une pluralité de stations d'usinage, au niveau desquelles une pluralité de groupes d'usinage exécutent des opérations d'usinage supplémentaires sur la pièce (3), jusqu'à atteindre une station de déchargement (60) relative à chaque pièce finie (3).

20. L'unité selon la revendication 18, **caractérisée en ce que** le chariot (44) supporte une autre pluralité d'outils (55) qui effectuent, au niveau de la deuxième station d'usinage (12), des usinages supplémentaires de perçage et/ou fraisage et/ou alésage sur la pièce (3) ; le chariot (44) et le premier module (19) étant mobiles l'un par rapport à l'autre de manière à permettre des opérations de changement d'outil pour effectuer toutes les opérations d'usinage supplémentaires sur la pièce (3).

21. L'unité selon l'une quelconque des revendications précédentes de 11 à 20, **caractérisée en ce qu'**au moins un des premier et deuxième mandrins (13, 16) comprend des moyens (50) de synchronisation de la vitesse de rotation destinés à égaliser la vitesse de rotation des deux mandrins (13, 16) au moins durant le transfert de la pièce (3) du premier au deuxième mandrin (13, 16).

22. L'unité selon l'une quelconque des revendications précédentes de 11 à 21, **caractérisée en ce que** les premier et deuxième mandrins (13, 16) sont positionnés de façon spéculaire par rapport à un plan (10) d'appartenance de la table tournante (5).
